# FASCICULE DE BREVET EUROPEEN

(11) **EP 3 595 960 B1**
(45) Date de publication et mention de la délivrance du brevet: **10.06.2026**
(21) Numéro de dépôt: 18714824.2
(22) Date de dépôt: 12.03.2018
(51) Int. Cl.: B62D 25/02, B62D 25/04

(54) **STRUCTURE DE VÉHICULE AUTOMOBILE**
KRAFTFAHRZEUGSSTRUKTUR
MOTOR VEHICLE STRUCTURE

(30) Priorité: 13.03.2017 FR 1752033
(43) Date de publication de la demande: 22.01.2020
(73) Titulaire: Stellantis Auto SAS, 78300 Poissy (FR)
(72) Inventeur: HARMOUT, Abdelaziz, Azrou 53100 (MA); BARBIER, Matthieu, 75017 Paris 17 (FR)
(74) Mandataire: BCIP
(86) Numéro de dépôt international: PCT/FR2018/050578
(87) Numéro de publication internationale: WO 2018/167418

(56) Documents cités:
- JP-A- 2009 173 110
- JP-A- H11 192 502
- US-A1- 2013 140 851

## Description

L'invention a trait à un longeron de châssis d'une - structure de véhicule automobile comprenant un premier profilé plié et un deuxième profilé plié adjacent au premier profilé.

Le document de brevet publié WO 2012/0168611 A1 décrit une structure de véhicule automobile et en particulier un longeron de châssis de véhicule. Le longeron est notamment sollicité lors d'un choc frontal ou latéral et participe ainsi à la sécurité passive du véhicule. Il forme aussi un support pour la fixation d'autres pièces de châssis ou de carrosserie. La tenue mécanique de tels longerons peut être améliorée par exemple en augmentant l'épaisseur des tôles employées. Cette solution a pour conséquence directe d'augmenter le poids du véhicule. L'emploi de tôles plus épaisses nécessite aussi la modification des outils et/ou des méthodes d'assemblage. Ceci n'est pas souhaitable dans une ligne d'assemblage qui doit pouvoir traiter de manière flexible différents types de véhicule avec un minimum de modification des outils employés. Un autre moyen d'augmenter la tenue mécanique est l'ajout de renforts localisés mais ceux-ci détériorent l'aptitude à la cuisson de la cataphorèse.

Le document JP 2009 173110 A décrit un bas de caisse constitué de deux flancs assemblés dont le flanc intérieur présente un renforcement d'épaisseur de tôle sur les feuillures d'assemblage pour supprimer les déformations du bas de caisse lors de collisions.

L'invention a donc pour objectif de proposer une structure de véhicule automobile qui répond aux critères de tenue mécanique, qui peut être assemblée avec les outils existants et qui n'augmente pas le poids du véhicule plus que strictement nécessaire.

L'invention a pour objet un longeron de châssis selon la revendication 1. plié », on entend un profilé mis en forme par déformation plastique du type pliage, emboutissage ou profilage.

Ainsi, les outils utilisés pour assembler des structures de véhicules automobiles qui ne présentent pas de variation d'épaisseur dans leurs flans peuvent également être employés pour assembler cette nouvelle structure. C'est particulièrement le cas pour la réalisation de soudures électriques par point au niveau des feuillures de jonction. Aussi, l'étendue des surépaisseurs permettant d'assurer la tenue mécanique de la structure est limitée aux zones utiles.

Avantageusement, la ou chacune des feuillures de jonction comprend un assemblage des bords des profilés par soudure électrique par point.

Selon un mode de réalisation avantageux, la première épaisseur est supérieure à 0.8 mm et/ou inférieure à 1.1 mm.

Avantageusement, la deuxième épaisseur est supérieure à 2 mm et/ou inférieure à 2.8 mm. Cette plage de valeurs permet par exemple la tenue aux chocs d'un véhicule de type PHEV (véhicules hybrides ou « Plug-In Hybrid Electric Vehicle »).

Selon un mode de réalisation avantageux, la deuxième épaisseur est supérieure à au moins deux fois la première épaisseur.

Selon un mode de réalisation avantageux, chacun des premier et deuxième profilés est un profilé de section creuse formée par la ou les tôles de deuxième épaisseur, et avec latéralement deux bords opposés formant deux des feuillures de jonction des profilés, lesdits bords étant formés par deux des tôles de première épaisseur.

Selon un mode de réalisation avantageux, le premier profilé est un longeron intérieur de bas de caisse et le deuxième profilé est un longeron extérieur dudit bas de caisse.

Selon un mode de réalisation avantageux, la section creuse du deuxième profilé est en forme de U.

Selon un mode de réalisation avantageux, les tôles métalliques sont jointes bout à bout par soudure laser.

D'autres caractéristiques et avantages de la présente invention seront mieux compris à l'aide de la description et des dessins parmi lesquels :
- La figure 1 décrit les deux profilés avant leur assemblage ;
- La figure 2 les profilés assemblés.

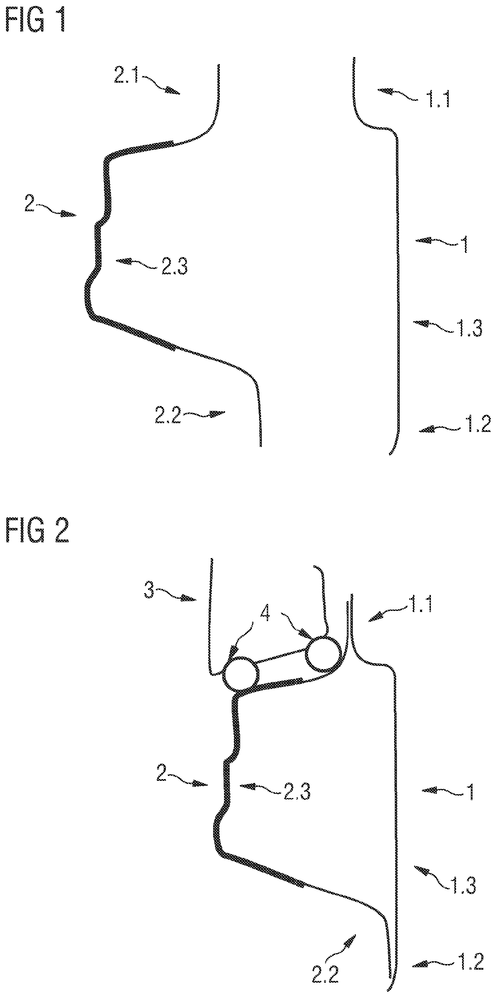

La figure 1 représente une section d'un premier profilé (1) et d'un deuxième profilé (2) destinés à être assemblés pour former une partie de structure de véhicule automobile.

Les profilés pliés sont à comprendre au sens large, c'est-à-dire qu'ils sont obtenus par pliage, emboutissage ou profilage d'une tôle (profilé 1 sur le mode de réalisation illustré) ou de plusieurs tôles préalablement assemblées entre elles (profilé 2). La technique employée pour assembler les tôles bout à bout avant leur mise en forme peut être du type soudage laser. De telles tôles sont disponibles commercialement notamment auprès de la société ArcelorMittal^{®}. Elles sont couramment désignées flans raboutés ou soudés laser, combinant alors plusieurs nuances et/ou plusieurs épaisseurs. Une autre technique qui peut être employée pour assembler les tôles entre elles avant leur déformation plastique est le raboutage molette.

Dans l'exemple illustré, les profilés sont des longerons de châssis. La représentation des figures 1 et 2 se fait dans le plan orthogonal à la direction longitudinale des longerons.

Sur le mode de réalisation illustré, les profilés présentent chacun deux bords (1.1, 1.2, 2.1, 2.2) qui sont destinés à venir en regard les uns des autres (voir figure 2). Les bords sont assemblés par soudage électrique, préférentiellement par points de soudure électrique. La structure de véhicule peut naturellement comporter plus de deux profilés, assemblés les uns aux autres en au moins l'un de leurs bords respectifs.

Entre les deux bords se trouve une zone intermédiaire concave, qui peut être de forme générale en U et/ou qui peut comporter de multiples pliures, courbures ou angles. La forme des profilés découle de la conception de la structure du véhicule, notamment pour les besoins d'étanchéité ou d'isolation phonique. De manière très schématique sont représentés en figure 2 le bas de la porte (3) du véhicule et les joints (4) entre la porte et le bas de caisse.

Au moins un des profilés comporte une épaisseur non constante. Dis autrement, au moins une des tôles (2.3) dont il est formé présente une épaisseur plus importante que les autres tôles (2.1, 2.2). La tôle de plus grande épaisseur est éloignée des bords. Ceci permet aux bords d'être assemblés avec les mêmes techniques et outils que pour les profilés d'épaisseur constante. La zone d'épaisseur importante permet de répondre aux contraintes mécaniques auxquelles peut être soumis le profilé.

Dans cet exemple, c'est le profilé (2) situé du côté extérieur du véhicule qui présente cette variation d'épaisseur. Alternativement ou en combinaison, le profilé intérieur (1) peut aussi présenter une variation d'épaisseur. Lorsque la structure de véhicule comporte plus de deux profilés, tout autre profilé peut aussi présenter cette caractéristique.

Dans un exemple non limitatif, les valeurs d'épaisseurs peuvent être comprises entre 0.8 et 1.1 mm pour les bords ou les zones de faible épaisseur (1.1, 1.2, 1.3, 2.1, 2.2) et comprises entre 2 et 2.8 mm pour les zones de plus grande épaisseur (1.3). Le ratio entre l'épaisseur maxi et l'épaisseur mini est d'environ 2. Il est entendu que l'homme du métier saurait adapter ces valeurs et le ratio épaisseur maxi / épaisseur mini en fonction des critères habituels de dimensionnement.

## Revendications

1. Longeron de châssis d'une structure de véhicule automobile, comprenant :
- un premier profilé plié (1);
- un deuxième profilé plié (2) adjacent au premier profilé (1) et comportant deux bords (2.1, 2.2) fixés chacun à un bord différent (1.1, 1.2) du premier profilé (1) de manière à former une feuillure de jonction ;
le deuxième profilé (2) étant constitué d'un flan comprenant au moins trois tôles métalliques (2.1, 2.2, 2.3) jointes bout à bout, au moins deux desdites tôles (2.1, 2.2) comprenant chacune un des bords formant la feuillure et présentant une première épaisseur, et au moins une autre desdites tôles (2.3) étant à distance desdits bords (2.1, 2.2) formant la feuillure, **caractérisée en ce que** l'autre desdites tôles (2.3) à distance desdits bords des deux desdites tôles présente une deuxième épaisseur supérieure à la première épaisseur, la tôle de plus grande épaisseur étant éloignée des bords.

2. Longeron de châssis d'une structure de véhicule automobile, selon la revendication 1, **caractérisée en ce que** la première épaisseur est supérieure à 0.8 mm et/ou inférieure à 1.1 mm.

3. Longeron de châssis d'une structure de véhicule automobile, selon l'une des revendications 1 et 2, **caractérisée en ce que** la deuxième épaisseur est supérieure à 2 mm et/ou inférieure à 2.8 mm.

4. Longeron de châssis d'une structure de véhicule automobile, selon l'une des revendications 1 à 3, **caractérisée en ce que** la deuxième épaisseur est supérieure à au moins deux fois la première épaisseur.

5. Longeron de châssis d'une structure de véhicule automobile, selon l'une des revendications 1 à 4, **caractérisée en ce que** chacun des premier et deuxième profilés (1, 2) est un profilé de section creuse formée par la ou les tôles de deuxième épaisseur (2.3), et avec latéralement deux bords opposés (1.1, 1.2, 2.1, 2.2) formant deux des feuillures de jonction des profilés, lesdits bords étant formés par deux des tôles de première épaisseur.

6. Longeron de châssis d'une structure de véhicule automobile, selon la revendication 5, **caractérisée en ce que** le premier profilé est un longeron intérieur de bas de caisse et le deuxième profilé est un longeron extérieur dudit bas de caisse.

7. Longeron de châssis d'une structure de véhicule automobile, selon l'une des revendications 5 et 6, **caractérisée en ce que** la section creuse du deuxième profilé est en forme de U.

8. Longeron de châssis d'une structure de véhicule automobile, selon l'une des revendications 1 à 7, **caractérisée en ce que** les tôles métalliques (1.1, 1.2, 1.3, 2.1, 2.2, 2.3) sont jointes bout à bout par soudure laser ou par raboutage molette avant leur mise en forme.

## Patentansprüche

1. Rahmenschelle einer Kraftfahrzeugstruktur mit:
- ein erstes gefaltetes Profil (1);
- ein zweites, an das erste Profil (1) angrenzendes Falzprofil (2), das zwei Ränder (2.1, 2.2) aufweist, die jeweils an einem anderen Rand (1.1, 1.2) des ersten Profils (1) befestigt sind, um einen Verbindungsfalz zu bilden;
Das zweite Profil (2) besteht aus einem Zuschnitt, der mindestens drei Metallbleche (2.1, 2.2, 2.3) umfasst, die aneinander anstoßend verbunden sind, wobei mindestens zwei der Bleche (2.1, 2.2) jeweils einen der den Falz bildenden Ränder aufweisen und eine erste Dicke aufweisen, und wobei mindestens ein anderes der Bleche (2.3) von den den Falz bildenden Rändern (2.1, 2.2) beabstandet ist, **dadurch gekennzeichnet, dass** das andere der Bleche (2.3) im Abstand von den Rändern der beiden Bleche eine zweite Dicke aufweist, die größer als die erste Dicke ist, wobei das Blech mit größerer Dicke entfernt ist Kanten.

2. Rahmenholm einer Kraftfahrzeugstruktur nach Anspruch 1, **dadurch gekennzeichnet, dass** die erste Dicke größer als 0,8 mm und/oder kleiner als 1,1 mm ist.

3. Rahmenholm einer Kraftfahrzeugstruktur nach einem der Ansprüche 1 und 2, **dadurch gekennzeichnet, dass** die zweite Dicke größer als 2 mm und/oder kleiner als 2,8 mm ist.

4. Rahmenholm einer Kraftfahrzeugstruktur nach einem der Ansprüche 1 bis 3, **dadurch gekennzeichnet, dass** die zweite Dicke größer als mindestens das Zweifache der ersten Dicke ist.

5. Rahmenholm einer Kraftfahrzeugstruktur nach einem der Ansprüche 1 bis 4, **dadurch gekennzeichnet, dass** jedes der ersten und zweiten Profile (1, 2) ein Hohlquerschnittsprofil ist, das durch das oder die Bleche zweiter Dicke (2.3) gebildet wird, und mit seitlich zwei gegenüberliegenden Rändern (1.1, 1.2, 2.1, 2.2), die zwei der Verbindungsblätter der Profile bilden, wobei die Ränder durch zwei der Bleche erster Dicke gebildet werden.

6. Rahmenholm einer Kraftfahrzeugstruktur nach Anspruch 5, **dadurch gekennzeichnet, dass** das erste Profil ein innerer Querträger des Unterbodens ist und das zweite Profil ein äußerer Querträger des Unterbodens ist.

7. Rahmenholm einer Kraftfahrzeugstruktur nach einem der Ansprüche 5 und 6, **dadurch gekennzeichnet, dass** der hohle Querschnitt des zweiten Profils U-förmig ist.

8. Rahmenholm einer Kraftfahrzeugstruktur nach einem der Ansprüche 1 bis 7, **dadurch gekennzeichnet, dass** die Metallbleche (1.1, 1.2, 1.3, 2.1, 2.2, 2.3) vor ihrer Formgebung durch Laserschweißen oder durch Rändelung stumpf miteinander verbunden sind.

## Claims

1. Chassis side member of a motor vehicle structure, comprising:
- first folded section (1);
- a second folded section (2) adjacent to the first section (1) and having two edges (2.1, 2.2) each fixed to a different edge (1.1, 1.2) of the first section (1) so as to form a joining rabbet;
the second section (2) being constituted by a blank comprising at least three metal sheets (2.1, 2.2, 2.3) joined end to end, at least two of said sheets (2.1, 2.2) each comprising one of the edges forming the rebate and having a first thickness, and at least one other of said sheets (2. 3) being at a distance from said edges (2.1, 2.2) forming the rebate, **characterised in that** the other of said sheets (2.3) at a distance from said edges of the two of said sheets has a second thickness greater than the first thickness, the sheet of greater thickness being at a distance from the edges.

2. Chassis side member of a motor vehicle structure, according to claim 1, **characterised in that** the first thickness is greater than 0.8 mm and/or less than 1.1 mm.

3. Chassis side member of a motor vehicle structure, according to one of claims 1 and 2, **characterised in that** the second thickness is greater than 2 mm and/or less than 2.8 mm.

4. Chassis side member of a motor vehicle structure, according to one of claims 1 to 3, **characterised in that** the second thickness is greater than at least twice the first thickness.

5. Chassis side member of a motor vehicle structure, according to one of Claims 1 to 4, **characterised in that** each of the first and second sections (1, 2) is a section of hollow section formed by the sheet or sheets of second thickness (2.3), and with two opposite edges (1.1, 1.2, 2.1, 2.2) laterally forming two of the junction rabbets of the sections, said edges being formed by two of the sheets of first thickness.

6. A chassis spar of a motor vehicle structure, according to claim 5, **characterised in that** the first section is an inner side spar of the lower body and the second section is an outer side spar of said lower body.

7. Chassis side member of a motor vehicle structure, according to one of claims 5 and 6, **characterised in that** the hollow section of the second section is U-shaped.

8. Chassis side member of a motor vehicle structure, according to one of claims 1 to 7, **characterised in that** the metal sheets (1.1, 1.2, 1.3, 2.1, 2.2, 2.3) are joined end to end by laser welding or by splicing before they are shaped.
